(19) Europäisches Patentamt
European Patent Office
Office européen des brevets

(11) Publication number: **0 130 675 B1**

# (12) EUROPEAN PATENT SPECIFICATION

(45) Date of publication of patent specification: **23.01.91**

(51) Int. Cl.$^5$: **G 01 N 31/22,** G 01 F 23/04

(21) Application number: **84302965.3**

(22) Date of filing: **02.05.84**

## (54) Chemical composition for the detection of water and probe containing it.

(30) Priority: **02.05.83 US 490744**
**27.06.83 US 507856**

(43) Date of publication of application:
**09.01.85 Bulletin 85/02**

(45) Publication of the grant of the patent:
**23.01.91 Bulletin 91/04**

(84) Designated Contracting States:
**BE DE FR GB IT NL**

(56) References cited:
**DE-A-3 007 744**
**FR-A-1 280 099**
**GB-A- 414 866**
**US-A-2 228 737**
**US-A-2 968 940**
**US-A-3 505 020**

(73) Proprietor: **SARTOMER COMPANY, INC.**
**Oaklands Corporate Center 468 Thomas Jones Way**
**Exton, PA 19341 (US)**

(72) Inventor: **Melpolder, Frank W.**
**208 Engle Drive**
**Wallingford, PA 19086 (US)**
Inventor: **Victor, James G.**
**126 Homestead Avenue**
**Haddonfield, NJ 08033 (US)**

(74) Representative: **Cropp, John Anthony David et al**
**MATHYS & SQUIRE 10 Fleet Street**
**London, EC4Y 1AY (GB)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 130 675 B1

## Description

The present invention relates to a novel visual indicating paste composition and to the utilisation of the same to detect the presence, and particularly the level, of aqueous solutions when admixed with hydrocarbons, such as gasoline, oil or other fuel and petroleum fractions. More particularly, the present invention is concerned with a visual indicating paste composition which is capable of undergoing a change in colour upon contact with aqueous solutions which may be present in minor amounts, generally as a separate phase, in hydrocarbon storage tanks, delivery vehicles, distribution systems, and the like. The composition of the invention is particularly adapted for use in determining the water level in the bottom of gasoline storage and transportation tanks to determine the amount of water resting in the tank partially filled with the hydrocarbon, and when the water contains oxygenated blending components, such as ethers and alcohols.

Pastes for detecting the level of water in hydrocarbon storage tanks, such as gasoline tanks employed at service stations, have been commercially available. In use, such pastes undergo a colour change after contacting with water. However, certain of these commercially available pastes are deficient in one or more characteristics such as: failure to exhibit a sharp and distinct colour change, high solubility in the water or hydrocarbon phases; comparatively short shelf life; or high hygroscopicity. A particular difficulty has been encountered with conventional water indicating pastes when attempts have been made to obtain accurate readings of the water level in tanks and delivery systems for hydrocarbons, such as gasoline, wherein the water contains oxygenated gasoline blending components leached from the gasoline, which components preclude the obtainment of a sharp and distinct colour change or cause bleed or run-off the measuring probe coated with the paste when contacted with such oxygen-containing aqueous solutions.

Paste compositions of interest have been disclosed in the prior art. In US Patent 2520993 there is disclosed a composition illustrative of such pastes comprising a water soluble cobalt thiocyanate and a finely dispersed filler material having a colour other than that of the thiocyanate. Polish Patent 94388 is also of interest wherein there is disclosed a paste which changes colour from blue to white or light pink upon contact with water, obtained by blending ammonium thiocyanate with cobalt chloride, an aromatic amine, glycerol, paraffinic oil and ground chalk. Austrian Patent 360961 discloses a self-adhesive indicator paste useful for detecting pH, nitrate and iron, coated on a polystyrene carrier, which is prepared by impregnating the carrier material with one or more indicator solutions containing Ethyl Red, bromxylenol blue, and acetone. GB—A—414866 describes a water-detecting composition compounded from chalk, glycerine, a dye and optionally a resin.

The present invention provides a visual indicating paste composition which will, upon contact with aqueous solutions, produce a clear detectable color change.

The paste compositions of the invention produce a sharp and distinct colour change upon contact with aqueous solutions without bleeding and react rapidly with water but not with any other oxygenated component which may be contained therein, or with the hydrocarbon with which the water is admixed.

Paste compositions according to the invention are also characterised by low solubility in aqueous solutions and hydrocarbons, long shelf life, low hygroscopicity and good adhesion to substrates to which they are applied in use applications.

A probe having coated thereon a visual indicating composition of the present invention is useful for locating the water level of aqueous solutions containing oxygenated blending components in the bottom of tanks and delivery systems containing hydrocarbons such as gasoline, and particularly for indicating sharp and distinct colour changes without bleeding or running off the probe.

It has now been discovered, after testing a number of combinations of materials, that a particular composition comprising a dye capable of changing colour in the pH range between 7 and 11 and certain inorganic bases dispersed in a liquid carrier, provides considerable improvement in effectiveness over commercially available pastes in producing a detectable colour upon contact with such admixtures, and particularly aqueous solutions containing oxygen-containing organic compounds, such as lower alkanols and ethers.

According to the present invention there is provided a visual indicating paste composition comprising a water soluble indicator dye capable of changing colour in the pH range between 7 and 11 and an inorganic base in the form of a caustic powder dispersed in a liquid carrier capable of absorbing water but which is not rapidly leached by water or hydrocarbon.

It is particularly preferred that the insoluble base is selected from alkaline earth oxides and hydroxides or mixtures thereof, especially calcium oxide.

It has been further found, in connection with attaining the objects of the invention, that the employment of a particular class of polyalkylene glycols, such as polyethylene glycols and polypropylene glycols, or mixtures thereof, of specified molecular weight, are especially effective as constituents in the composition of the invention due to their ability to absorb water, but not being rapidly leached by water or hydrocarbons.

Yet another feature of the invention resides in the incorporation of a gelling agent which serves as a thickener and/or colour stabiliser, thereby retarding leaching and providing gelling of the composition, as an additional component of the visual indicating paste composition.

In the present invention, the visual indicating paste composition turns colour, generally within about

30 seconds or less, and normally within about 5 to 15 seconds, depending upon the indicator dye employed, when it comes in contact with water or an aqueous liquid, i.e., a liquid having aqueous properties, such as water containing lower alcohols, illustratively methanol, ethanol, tertiary butyl alcohol, secondary butyl alcohol and mixtures thereof; lower polyols such as glycols, and lower ketones such as acetone and methyl tertiary butyl ether, and the like. The term 'aqueous liquid' is employed herein to designate such substances having chemical characteristics similar to those of water, as distinguished from 'oily liquid', i.e. a fuel, petroleum or coaltar hydrocarbon oils and the like, which do not effect a change in colour of the composition of the present invention. The aqueous liquids referred to hereinabove are typically obtainable from the use of oxygenated blending components in hydrocarbons, such as gasoline, which are leached from the hydrocarbon into the water layer and may contain up to about 95% of oxygenated hydrocarbon.

The present invention provides a readily utilisable paste composition which is particularly adapted for locating the water level in tanks or other storage or delivery facilities for hydrocarbons which may be admixed with water, or with 'aqueous liquids', as above defined. A particular application of the compositions of the present invention is found in measuring the level of water bottoms in gasoline storage tanks which must be monitored frequently to prevent the delivery of water into customer's gasoline tanks. Presently available paste compositions are generally satisfactory for detection of levels of water in tanks, however, water bottoms of storage or delivery facilities for gasoline containing oxygenated blending components, i.e. gasolines containing alcohols or ethers, such as methanol, ethanol, tertiary butyl alcohol, methyl-tertiary butyl ether, or mixtures thereof, may contain up to about 90 volume percent of alcohol in the water level. Commercial available pastes, it has been found, fail to change colour of aqueous liquids found in such gasoline tanks without bleeding or running and hence fail, under these circumstances, to exhibit a sharp colour change.

The indicator dyes employed in the composition of the present invention are water-soluble dyes which are readily available from commercial sources as fine anhydrous crystalline powders. In general, the dye particles exhibit diameters not greater than about 200 microns. These dyes are characterised as being capable, upon contact with water, of effecting colour change of the paste composition in the pH range between about 7 and about 11, preferably between about 8 and about 10. Such dyes are normally employed as components of paste compositions in an amount sufficient to provide the desired colour change. In general, such dyes may be employed in concentrations ranging from between about 1 and about 10, preferably between about 4 and about 8 percent, based on the total weight of the paste composition. Representative indicator dyes employable as constituents in the compositions of the invention include: phenolphthalein, o-cresolphthalein, p-naphtholbenzein, ethyl bis(2,4-dinitrophenol) acetate, thymolphthalein, and Nile Blue A (CI51180), it being understood, however, that any dye meeting the aforementioned specifications is employable in the compositions of the invention.

If desired, admixtures of these indicator dyes may be employed in amounts ranging from about 1:10 to 10:1, by weight, to achieve a high contrast of colour change when the paste composition is employed in an environment requiring an especially high contrasting change, e.g. in storage tanks containing excessive quantities of dirt, rust or other dark coloured materials or debris.

The caustic powder employed as a constituent of the visual indicator paste compositions of the present invention must be one which does not dissolve and ionise in the liquid carrier, but is readily soluble in water. In general, it has been found that anhydrous solid forms of an alkaline earth oxide, hydroxide, or mixtures thereof, or any compound which will generate an alkaline earth oxide or hydroxide *in situ*, e.g. an alkaline earth hydride, are suitable for use in such compositions. These materials may be in the form of a finely divided technical grade crystalline powder and are readily available from commercial sources. Typical caustic powders employable in accordance with the invention include calcium oxide, calcium hydroxide, strontium oxide, strontium hydroxide, barium oxide, barium hydroxide, magnesium oxide, magnesium hydroxide, and hydrides of these metals such as calcium hydride. In general, the caustic powder is employed in a concentration ranging from about 1 to about 20 or 25 percent, preferably between about 5 and about 15 or 20 percent, by weight of the composition, in order to provide the desirable water sensitivity properties characteristic of the compositions of the present invention.

As a vehicle for the paste composition of the invention, there is employed a liquid carrier which is capable of absorbing water, but is not readily leached by water or by the hydrocarbon, so that the paste does not bleed or run off the probe. Any organic compound, or mixture thereof, exhibiting such characteristics and which is inert to the other composition ingredients may be employed. It will also be appreciated that desirably the vehicle should not inhibit fairly rapid, i.e. within about 2 minutes or less, colour reaction of the indicator dye, upon contact of the composition with aqueous solution, yet should have a sufficiently high viscosity for good paste consistency and a low freezing point. Especially suitable liquid carriers employable include aliphatic polyols, alkylene glycols and polyalkylene glycols of sufficiently high molecular weight to preclude their solubility in the water/hydrocarbon environment in which the visual indicating paste composition is employed. In general, the polyols and glycols, or mixtures thereof, having a molecular weight of at least about 75 prefereably at least about 150 are useful as liquid carriers in the composition of the present invention.

Illustrative polyols employable in the composition of the invention include 1,4-butanediol; 1,3-butanediol; hexylene glycol; 1,2,6-hexanediol; and 1,6-hexanediol. The polyalkylene glycols normally

contain from between about 2 and 4 carbon atoms in each alkylene chain unit of the polyalkylene glycol. Illustrative polyalkylene glycols employable include polyethylene glycol, polypropylene glycol, and polybutylene glycol having molecular weights between about 200 and about 4000. As is evident to those skilled in the art, such polyalkylene glycols are commercially available products and are employable either alone or as mixtures with or without other conventional liquid carriers, and, when employed as mixtures, are employed to obtain the optimum hydrophilic/hydrophobic balance. In general, the liquid carrier is employed in an amount at least about 40 percent, and generally between about 50 and about 90 percent, based on the weight of the paste composition. Polyalkylene glycols of molecular weight between about 200 and 1500, employed in an amount of between about 60 and 80 percent of the total weight of the paste composition, provide particularly desirable properties, and hence, are preferred for use in the composition of the invention. Admixtures of polyethylene glycol and polypropylene glycol of molecular weight between about 300 and 1500, employed in an amount of between about 60 and 80 percent of the total weight of the paste composition, may be mentioned in particular.

If desired, a gelling agent which serves as a thickener and/or colour stabiliser, and which is inert to the ingredients of the composition, may optionally be employed as an added constituent of the paste composition of the invention. The purpose of use of such gelling agent is to retard leaching and to gel the composition. Any known filler having a colour other than that which would interfere with the visual detection provided by the paste composition of the invention in its application and which serves to provide the thickening properties and colour stabilisation indicated may be employed. Illustrative suitable gelling agents employed as components of the composition of the present invention include inert filler or diluents such as talc, clay, diatomaceous earth, calcium silicate, silica, fumed colloidal silica, alumina, pyrophyllite, calcite, or mixtures of the same or other finely divided solid materials. In general, if employed the gelling agent is used in quantities up to about 20 percent, or more, preferably between about 5 and about 15 percent, based on the total weight of the paste composition.

The shelf life of the composition of the invention and their tolerance to trace quantities of water during storage, e.g. as a result of water penetrating the paste if humid conditions exist during manufacture or storage of the paste or if water is absorbed into the paste when the container is opened during each application of the paste by the user or if water is introduced with the ingredients such as liquid carriers employed in the formulation of the paste, may be improved if the composition further includes a minor amount of certain boric acid esters or related organic compounds in which the boron is attached to oxygen. These paste compositions also produce a sharp and distinct colour change, without bleeding, upon contact with water, and particularly, with aqueous solutions containing oxygen-containing organic compounds, such as lower alkanols and ethers. The discovery that such boron compounds are capable of acting as water scavengers in such compositions, thereby chemically reacting with water or aqueous solutions prior to the caustic powder-indicator dye colour reaction, was surprising, especially since attempts to employ other added organic compounds including acids, anhydrides, salts, oxides, molecular sieve adsorbents and active metal compounds were all unsuccessful. These compounds failed due to the reaction being either too slow or too active, thereby rendering the caustic powder of the aforementioned paste compositions impotent. Specific examples of failures included adipic acid, stearic acid, maleic anhydride, boric acid, calcium chloride, aluminum isopropoxide and aluminum sulfate.

Any ester of boric acid or anhydride, ortho or meta, or related organic compound in which boron is attached to oxygen, and capable of being hydrolyzed upon contact with water to yield boric acid or a salt thereof, is employable as a stabiliser in the paste compositions of the present invention. An additional required characteristic of the boron compounds employable herein is that they be fully miscible with or soluble in the liquid carrier of the paste composition. Any ester, or partial ester, of boric acid, also termed alkoxy- and aryloxy boranes, may be conveniently employed as an ingredient of the composition of the present invention. In general, these boron esters conform to the general formula:

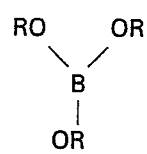

(I)

wherein R taken singly may be the same or different, and may be:

(a) alkyl, primary or secondary, substituted or unsubstituted, having from one to twenty-two carbon atoms, such as ethyl, propyl, hexyl, hexadecyl, stearyl, eicosyl and the like, or

(b) aryl, substituted or unsubstituted, such as tolyl, phenyl, xylyl and the like;

(c) aralkyl, substituted or unsubstituted, having from seven to twenty carbon atoms such as benzyl, phenethyl, 4-methylbenzyl and the like; or

(d) hydrogen;

with the proviso that at least one R be alkyl, aryl or aralkyl. Straight chain trialkyl borates are preferred. Illustrative alkyl borates employable in the paste compositions of the invention include triethyl borate, tripropyl borate, tri-isopropyl borate, trimethylene borate, tri-n-butyl borate, tri-n-hexyl borate, and tri

stearyl borate. Tertiary alkyl borates, it has been found, do not provide the stability of the primary and secondary alkyl borates.

Other boron compounds employable in the compositions of the present invention include acyloxyboranes conforming to the general formulae:

$$(R\overset{O}{\overset{\|}{C}}O)_3B \quad (II) \qquad \text{and} \qquad (R\overset{O}{\overset{\|}{C}}O)_2B—O—B(O\overset{O}{\overset{\|}{C}}R)_2 \quad (III)$$

wherein R is as defined above. Typical examples of acyloxyboranes employable include acetyloxyborane, hexaoctonoyloxy borane, and oxy-bis(boron acetate) and the like. Another class of boron-containing compounds employable in the compositions of the invention are alkoxyhaloboranes represented by the structures:

$$ROBX_2 \quad (IV) \qquad \text{and} \qquad (RO)_2BX \quad (V)$$

wherein R is a primary or secondary alkyl group as above defined and X is a halogen atom such as chlorine and fluorine. Illustrative alkoxyhaloboranes include methyloxydichloroborane, octyloxychlorofluoroborane, and monochlorohexylborate. Polyhydroxylborates such as ethylene glycol biborate, propylene glycol biborate and catechol biborate serve as an example of still another class of boron compounds suitable as constituents of the compositions of the invention.

The boron compound is employed in the paste composition in an amount sufficient to provide the desired stabilisation or inhibition to moisture. In general, the boron compound stabiliser is present in the composition of the invention in a concentration ranging from about 0.05 to about 5, preferably between about 0.5 and about 3 percent, by weight of the composition.

The compositions of the present invention may be prepared by customary methods employed in the art for the production of paste compositions. In general, the components of the composition are conventionally fed to a mixer at ambient temperature and blended to an even, smooth paste, it being understood that blending at elevated temperatures or under other conditions conventionally employed for blending pastes may be employed. Incorporation of the ingredients of the composition is readily effected by incorporation of the solid components, individually or together, by grinding, dry-mixing, or blending into the vehicle. Hence, the insoluble base, indicator dye, and gelling agent and/or boron compound if employed, may be incorporated prior to, concurrently with, or after the incorporation of the other solid ingredients in the vehicle. Where the boron compound is employed, a preferred alternative is that prior to incorporation of the solid ingredients in the vehicle the boron compound is dissolved in the vehicle. Since the boron compounds and their hydrolysis products are soluble in the vehicle, these compounds are ideal for drying the vehicle before preparation of the paste and thereafter the boron compound continues to function as a water scavenger during storage and use of the paste.

It is to be understood that the paste composition of the present invention may additionally include adjuvants well-known to those skilled in the art, such as sticking agents, and the like. Hence as sticking agents, there may be employed materials such as casing gelatine, cellulose derivatives such as carboxymethyl cellulose, sulfite waste liquor, water-dispersible synthetic resins, mineral oil, or equivalent adhesives, all of which are well-known in the art.

The present invention provides readily utilisable paste compositions which are particularly adapted for locating the water level in tanks or other storage or delivery facilities for hydrocarbons which may be admixed with water, or with 'aqueous liquids', as above defined. A particular application of the compositions of the present invention is found in measuring the level of water bottoms in gasoline storage tanks which must be monitored frequently to prevent the delivery of water into vehicle gasoline tanks. Although presently available paste compositions are generally satisfactory for detection of levels of water in tanks; however, water bottoms of storage or delivery facilities for gasoline containing oxygenated blending components, i.e., gasolines containing alcohols or ethers such as methanol, ethanol, tertiary butyl alcohol, methyltertiary butyl ether, or mixtures thereof, may contain up to about 90 volume percent of alcohol in the water level.

The invention may be more fully understood by reference to the following examples:

Example 1

A paste composition was prepared comprising the components indicated in Table I below:

TABLE I

| Component | Weight percent |
|---|---|
| Phenolphthalein | 6 |
| Calcium oxide | 9 |
| Polyethylene glycol 400 | 35 |
| Polypropylene glycol 725 | 20 |
| Polypropylene glycol 1000 | 20 |
| Fumed colloidal silica | 10 |

The components were fed to a mixer at ambient temperature and blended to a even, smooth colourless paste. Thereafter, the lower end, approximately 4 inches, of a conventionally employed measuring tank gauge was coated with a thin layer of the paste and the probe was lowered to the bottom of a gasoline tank containing unleaded gasoline motor fuel, blended with Oxinol (Trade Mark) blending component comprising an equal admixture of methanol and tertiary butyl alcohol. After holding the gauge to the bottom of the tank for approximately 20 to 30 seconds, the gauge was removed from the tank and there was observed a deep red colour on the end of the probe showing the depth of the water/alcohol layer.

Example II

A colourless paste composition comprising the ingredients set forth in Table I, above, except that o-cresolphthalein is employed as the indicator, in place of phenolphthalein, is prepared. Following coating of the measuring probe with the composition and lowering into a storage tank containing 'Gasohol', gasoline, a motor fuel comprising approximately 90 percent of hydrocarbons and 10 percent of ethanol, as carried out in Example I, there is observed a deep red colour on the end of the probe showing the depth of the water/alcohol layer.

Example III

A paste composition comprising the components indicated in Table II below was prepared:

TABLE II

| Component | Weight percent |
|---|---|
| Phenolphthalein | 7.3 |
| Calcium oxide | 20.0 |
| Tripropylene glycol* | 65.9 |
| Fumed colloidal silica | 6.8 |
| | 100.0 |

* containing 1.0 weight percent tripropyl borate.

The components were fed to a mixer at ambient temperature and blended to a even, smooth colourless paste. Thereafter, the lower end, approximately 4 inches, of a conventionally employed measuring tank gauge was coated with a thin layer of the paste and the probe was lowered to the bottom of a gasoline tank containing unleaded gasoline motor fuel, blended with Oxinol (Trade Mark) 50 blending component comprising methanol and tertiary butyl alcohol. After holding the gauge to the bottom of the tank for approximately 10 seconds, the gauge was removed from the tank and there was observed a deep red colour on the end of the probe showing the depth of the water/alcohol layer.

Example IV

A paste composition comprising the components indicated in Table III, below, was prepared:

TABLE III

| Component | Weight percent |
|---|---|
| Thymolphthalein | 1.4 |
| Calcium oxide | 21.3 |
| Tripropylene glycol* | 70.0 |
| Fumed colloidal silica | 7.3 |

* containing 1.0 weight percent tripropyl borate.

The components were fed to a mixer at ambient temperature and blended to a even, smooth colourless paste. Thereafter, the lower end, approximately 4 inches, of a conventionally employed measuring tank gauge was coated with a thin layer of the paste and the probe was lowered to the bottom of a gasoline tank containing unleaded gasoline motor fuel, blended with Oxinol (Trade Mark) 50 blending component comprising methanol and tertiary butyl alcohol. After holding the gauge to the bottom of the tank for approximately 10 seconds, the gauge was removed from the tank and there was observed a deep blue colour on the end of the probe showing the depth of the water/alcohol layer.

Example V

A paste composition comprising the components indicated in Table IV below is prepared:

TABLE IV

| Component | Weight percent |
|---|---|
| Phenolphthalein | 9.6 |
| Thymolphthalein | 1.9 |
| Calcium oxide | 19.2 |
| Polypropylene glycol 725* | 62.8 |
| Fumed colloidal silica | 6.5 |

* containing 0.5 weight percent tripropyl borate.

The components were fed to a mixer at ambient temperature and blended to a even, smooth colourless paste. Thereafter, the lower end, approximately 4 inches, of a conventionally employed measuring tank gauge was coated with a thin layer of the paste and the probe was lowered to the bottom of a gasoline tank containing unleaded gasoline motor fuel, blended with Oxinol (Trade Mark) 50 blending component comprising methanol and tertiary butyl alcohol. After holding the gauge to the bottom of the tank for approximately 10 seconds, the gauge was removed from the tank and there was observed a deep purple colour on the end of the probe showing the depth of the water/alcohol layer.

Example VI

This Example illustrates the improved stability of the paste of the invention when it includes borate.

The test employs a constant humidity chamber comprising a large dessicator with an aqueous slurry of calcium chloride in the lower base. At room temperature the humidity of the enclosed air space remains constant at 33 relative percent. The upper section of the dessicator is separated from the aqueous solution by a shelf having many openings for free circulation of the humidified air. The paste compositions employed in this Comparative Example are identified in Table V below:

TABLE V

| Component | Weight percent Inhibited paste | Non-inhibited paste |
|---|---|---|
| Phenophthalein | 5.7 | 5.7 |
| Calcium oxide | 9.0 | 9.0 |
| Polypropylene glycol 725 | 46.65 | 47.5 |
| Polyethylene glycol 400 | 28.3 | 28.3 |
| Tripropyl borate | 0.85 | — |
| Fumed colloidal silica | 9.5 | 9.5 |
| | 100.0 | 100.0 |

Samples of paste are prepared on microscope slides by placing a small amount of paste on the surface and covering with a circular cover glass. The cover glass is pressed down firmly to spread out evenly the paste film to the edges of the cover glass. The slide is then placed inside the dessicator. In this manner, samples of various paste compositions may be made at the same time for comparative measurement.

Periodically, observations are made of any colour changes that may occur due to water absorption from the humidified air. Usually the outermost edge of the inhibited paste will begin to colour within the first hour. Thereafter, the progress of colour development into the interior takes increasingly longer times. Arbitrarily, the point for comparison is taken as the time required to colour the first 0.5 millimeter of the paste film as measured from the leading edge. For the non-inhibited paste (i.e. paste devoid of boron compound) the time for 0.5 mm coloration at 75°F was 6 hours. In contrast, paste inhibited with tripropyl borate required a residence time of 150 hours to reach the same degree of coloration.

**Claims**

1. A visual indicating paste composition for producing a detectable colour change upon contact with an aqueous solution and including a water soluble indicator dye, and an inorganic base dispersed in a liquid carrier capable of absorbing water but which is not readily leached by water or hydrocarbon, characterised in that said dye is capable of changing colour in the pH range between 7 and 11 and said inorganic base is in the form of a caustic powder.

2. A composition as claimed in Claim 1 wherein said liquid carrier is selected from aliphatic polyols, alkylene glycols and polyalkylene glycols.

3. A visual indicating paste composition for producing a detectable colour change upon contact with an aqueous solution and including a water soluble indicator dye, and an inorganic base dispersed in a liquid carrier capable of absorbing water but which is not readily leached by water or hydrocarbon, characterised in that said dye is capable of changing colour in the pH range between 7 and 11, said inorganic base is in the form of a caustic powder and said liquid carrier is selected from aliphatic polyols, alkylene glycols and polyalkylene glycols.

4. A composition as claimed in any one of the preceding claims characterised in that it further includes at least one boron-containing compound which is miscible with or soluble in said carrier and capable of being hydrolyzed upon contact with water to yield boric acid or a salt thereof, presesnt in a moisture inhibiting amount.

5. A composition as claimed in Claim 4 characterised in that the boron-containing compound is a boron ester.

6. A composition as claimed in Claim 5 characterised in that said boron ester is a straight chain trialkyl borate.

7. A composition as claimed in any one of Claims 4 to 6 characterised in that said boron-containing compound is present in an amount of between 0.05 and 5% by weight of the composition.

8. A composition as claimed in any one of Claims 1 to 7 characterised in that it further includes a gelling agent.

9. A composition as claimed in Claim 8 characterised in that the gelling agent is fumed colloidal silica.

10. A composition as claimed in any one of Claims 1 to 9 characterised in that said base is selected from oxides and hydroxides of alkaline earth metals.

11. A composition as claimed in Claim 10 characterised in that said base is finely divided solid calcium oxide.

12. A composition as claimed in any one of Claims 1 to 11 characterised in that said liquid carrier has a molecular weight of at least 75.

13. A composition as claimed in Claim 12 characterised in that said liquid carrier comprises a mixture of polyethylene and polypropylene glycols having a molecular weight of between about 300 and 1500.

14. A composition as claimed in any one of Claims 1 to 13 characterised in that said indicator dye is

selected from phenolphthalein, o-cresolphthalein, p-naphtholbenzein, ethyl bis(2,4-dinitrophenol) acetate, thymolphthalein, and Nile Blue A.

15. A composition as claimed in Claim 8 when appendant to Claim 4 characterised in that said indicator dye is phenophthalein, said liquid carrier comprises a polyalkylene glycol containing two to four carbon atoms in each unit of the alkylene chain and has a molecular weight of between about 200 and 1500, said gelling agent is fumed colloidal silica and said boron ester is tripropyl borate present in an amount of between about 0.5 and about 3% by weight of the composition.

16. A water detecting probe comprising a graduated bar coated on at least one end thereof with the composition as claimed in any one of Claims 1 to 15.

**Patentansprüche**

1. Visuell anzeigende Patenzusammensetzung zur Erzeugung einer feststellbaren Farbänderung beim Kontakt mit einer wäßrigen Lösung, enthaltend einen wasserlöslichen Indikatorfarbstoff und eine anorganische Base, die in einem flüssigen Träger dispergiert ist, der imstande ist, Wasser zu absorbieren, aber nicht sofort durch Wasser oder einen Kohlenwasserstoff auslaugbar ist, dadurch gekennzeichnet, daß der genannte Farbstoff imstande ist, die Farbe in einem pH-Bereich zwischen 7 und 11 zu ändern, und die genannte anorganische Base in Form eines kaustischen Pulvers vorliegt.

2. Zusammensetzung nach Anspruch 1, dadurch gekennzeichnet, daß der genannte flüssige Träger ausgewählt ist aus der Gruppe bestehend aus aliphatischen Polyolen, Alkylenglykolen und Polyalkylenglykolen.

3. Visuell anzeigende Pastenzusammensetzung zur Erzeugung einer feststellbaren Farbänderung beim Kontakt mit einer wäßrigen Lösung, enthaltend einen wasserlöslichen Indikatorfarbstoff und eine anorganische Base, die in einem flüssigen Träger dispergiert ist, der imstande ist, Wasser zu absorbieren, aber nicht sofort durch Wasser oder einen Kohlenwasserstoff auslaugbar ist, dadurch gekennzeichnet, daß der genannte Farbstoff imstande ist, die Farbe in einem pH-Bereich zwischen 7 und 11 zu ändern, die genannte anorganische Base in Form eines kaustischen Pulvers vorliegt und der genannte flüssige Träger ausgewählt ist aus der Gruppe bestehend aus aliphatischen Polyolen, Alkylenglykolen und Polyalkylenglykolen.

4. Zusammensetzung nach irgendeinem der vorhergehenden Ansprüche, dadurch gekennzeichnet, daß sie weiters mindestens eine borhältige Verbindung enthält, die mit dem genannten Träger mischbar oder darin löslich ist, beim Kontakt mit Wasser hydrolysierbar ist, um Borsäure oder ein Salz derselben zu ergeben, und in einer feuchtigkeitshemmenden Menge vorliegt.

5. Zusammensetzung nach Anspruch 4, dadurch gekennzeichnet, daß die borhältige Verbindung ein Borester ist.

6. Zusammensetzung nach Anspruch 5, dadurch gekennzeichnet, daß der genannte Borester ein geradkettiges Trialkylborat ist.

7. Zusammensetzung nach irgendeinem der Ansprüche 4 bis 6, dadurch gekennzeichnet, daß die borhältige Verbindung in einer Menge zwischen 0,05 und 5 Gew.-%, bezogen auf die Zusammensetzung, vorliegt.

8. Zusammensetzung nach irgendeinem der Ansprüche 1 bis 7, dadurch gekennzeichnet, daß sie weiters ein Geliermittel enthält.

9. Zusammensetzung nach Anspruch 8, dadurch gekennzeichnet, daß das Geliermittel kolloidale pyrogene Kieselsäure ist.

10. Zusammensetzung nach irgendeinem der Ansprüche 1 bis 9, dadurch gekennzeichnet, daß die genannte Base ausgewählt ist aus den Oxiden und Hydroxiden von Erdalkalimetallen.

11. Zusammensetzung nach Anspruch 10, dadurch gekennzeichnet, daß die genannte Base feinverteiltes festes Kalziumoxid ist.

12. Zusammensetzung nach irgendeinem der Ansprüche 1 bis 11, dadurch gekennzeichnet, daß der genannte flüssige Träger ein Molekulargewicht von mindestens 75 besitzt.

13. Zusammensetzung nach Anspruch 12, dadurch gekennzeichnet, daß der genannte flüssige Träger ein Gemisch aus Polyethylen- und Polypropylenglykolen umfaßt, das ein Molekulargewicht zwischen etwa 300 und 1500 besitzt.

14. Zusammensetzung nach irgendeinem der Ansprüche 1 bis 13, dadurch gekennzeichnet, daß der genannte Indikatorfarbstoff ausgewählt ist aus der Gruppe bestehend aus Phenolphthalein, o-Cresolphthalein, p-Naphtholbenzein, Ethyl-bis-(2,4-dinitrophenol)-acetat, Thymolphthalein und Nilblau A.

15. Zusammensetzung nach Anspruch 8, rückbezogen auf Anspruch 4, dadurch gekennzeichnet, daß der genannte Indikatorfarbstoff Phenophthalein ist, der genannte flüssige Träger ein Polyalkylenglykol mit zwei bis vier Kohlenstoffatomen in jeder Einheit der Alkylenkette umfaßt und ein Molekulargewicht zwischen etwa 200 und 1500 besitzt, das Geliermittel kolloidale pyrogene Kieselsäure ist und der genannte Borester Tripropylborat ist und in einer Menge zwischen etwa 0,5 und etwa 3 Gew.-%, bezogen auf die Zusammensetzung, vorliegt.

16. Wassernachweisfühler bestehend aus einem mit einer Skala versehenen Stab, der an mindestens einem seiner Enden mit der Zusammensetzung nach irgendeinem der Ansprüche 1 bis 15 beschichtet ist.

**Revendications**

1. Composition pâteuse indicatrice visuelle destinée à produire un changement de couleur détectable au contact d'une solution aqueuse et comprenant un indicateur colorant soluble dans l'eau et une base minérale dispersée dans un support liquide capable d'absorber l'eau mais qui n'est pas facilement extrait par l'eau ou un hydrocarbure, caractérisée en ce que ledit colorant est capable de changer de couleur dans une gamme de pH comprise entre 7 et 11 et en ce que ladite base minérale est sous la forme de poudre caustique.

2. Composition selon la revendication 1, dans laquelle ledit support liquide est choisi parmi les polyols aliphatiques, les alkylène glycols et les polyalkylène glycols.

3. Composition pâteuse indicatrice visuelle destinée à produire un changement de couleur détectable au contact d'une solution aqueuse et comprenant un indicateur colorant soluble dans l'eau et une base minérale dispersée dans un support liquide capable d'absorber l'eau mais qui n'est pas facilement extrait par l'eau ou un hydrocarbure, caractérisée en ce que ledit colorant est capable de changer de couleur dans une gamme de pH comprise entre 7 et 11, en ce que ladite base minérale est sous la forme de poudre caustique et en ce que ledit support liquide est choisi parmi les polyols aliphatiques, les alkylène glycols et les polyalkylène glycols.

4. Composition selon l'une des revendications précédentes, caractérisée en ce qu'elle comprend en outre au moins un composé contenant du bore, miscible avec ou soluble dans ledit support et capable d'être hydrolysé au contact de l'eau pour former l'acide borique ou l'un de ses sels, présent dans une quantité capable d'inhibier l'humidité.

5. Composition selon la revendication 4, caractérisée en ce que le composé contenant du bore est un ester borique.

6. Composition selon la revendication 5, caractérisée en ce que ledit ester borique est un borate de trialkyle à chaîne droite.

7. Composition selon l'une des revendications 4 à 6, caractérisée en ce que ledit composé contenant du bore est présent en une quantité comprise entre 0,05 et 5% en poids de la composition.

8. Composition selon l'une des revendications 1 à 7, caractérisée en ce qu'elle comprend en outre un agent de gelification.

9. Composition selon la revendication 8, caractérisée en ce que l'agent de gelification est de la silice colloïdale fumée.

10. Composition selon l'une des revendications 1 à 9, caractérisée en ce que ladite base est choisie parmi les oxydes et les hydroxydes de métaux alcalino-terreux.

11. Composition selon la revendication 10, caractérisée en ce que ladite base est un oxyde de calcium solide finement divisé.

12. Composition selon l'une des revendications 1 à 11, caractérisée en ce que ledit support liquide possède un poids moléculaire d'au moins 75.

13. Composition selon la revendication 12, caractérisée en ce que ledit support liquide comprend un mélange de polyéthylène glycols et de polypropylène glycols ayant un poids moléculaire compris entre environ 300 et 1500.

14. Composition selon l'une des revendications 1 à 13, caractérisée en ce que ledit indicateur colorant est choisi parmi la phénolphtaleine, l'o-crésolphtaleine, la p-naphtolbenzeine, l'acétate d'éthyl bis (2,4-dinitrophénol), la thymolphtaleine et le bleu Nil A.

15. Composition selon la revendication 8 lorsque celle-ci est rattachée à la revendication 4, caractérisée en ce que ledit indicateur colorant est la phénolphtaleine, ledit support liquide comprend un polyalkylène glycol contenant de 2 à 4 atomes de carbone dans chaque unité de la chaîne alkyléne et possède un poids moléculaire compris entre 200 et 1500, ledit agent de gelification est la silice colloïdale fumée et ledit ester borique est le tripropyl borate présent dans une quantité de 0,5 à 3% environ en poids de la composition.

16. Sonde de détection de l'eau comprenant une échelle graduée couverte à au moins l'une des extrémités par une composition selon l'une des revendications 1 à 15.